(19) Europäisches Patentamt
European Patent Office
Office européen des brevets

(11) **EP 4 309 281 B1**

(12) **EUROPEAN PATENT SPECIFICATION**

(45) Date of publication and mention
of the grant of the patent:
**10.07.2024 Bulletin 2024/28**

(21) Application number: **22729993.0**

(22) Date of filing: **20.05.2022**

(51) International Patent Classification (IPC):
**B60N 2/02** *(2006.01)* **B60N 2/06** *(2006.01)*
**H02P 7/00** *(2016.01)*

(52) Cooperative Patent Classification (CPC):
**H02P 7/0094;** B60N 2/02246; B60N 2/0244;
B60N 2/06

(86) International application number:
**PCT/US2022/030226**

(87) International publication number:
**WO 2022/246176 (24.11.2022 Gazette 2022/47)**

(54) **MOTOR POSITION ESTIMATION USING CURRENT RIPPLES**

MOTORPOSITIONSSCHÄTZUNG UNTER VERWENDUNG VON STROMRIPPELN

ESTIMATION DE POSITION DE MOTEUR AU MOYEN D'ONDULATIONS DE COURANT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.05.2021 US 202163190995 P**

(43) Date of publication of application:
**24.01.2024 Bulletin 2024/04**

(73) Proprietor: **Magna Seating Inc.
Aurora, Ontario L4G 7K1 (CA)**

(72) Inventors:
• **YANG, Hanlong
Novi, MI 48375 (US)**

• **WU, Ruihang
Bloomfield, MI 48322 (US)**
• **KOBBERSTAD, Matthew, J.
Northville, MI 48167 (US)**

(74) Representative: **Glawe, Delfs, Moll
Partnerschaft mbB von
Patent- und Rechtsanwälten
Postfach 13 03 91
20103 Hamburg (DE)**

(56) References cited:
**EP-A1- 2 688 197     US-A1- 2019 253 010
US-A1- 2019 390 500     US-A1- 2020 186 062
US-A1- 2020 343 842     US-A1- 2021 044 228**

**Description**

**BACKGROUND OF THE INVENTION**

**1. Field of the Invention**

The present disclosure relates generally to a method for monitoring and controlling an electric motor. More particularly, the invention relates to a method for determining a rotational position and/or a speed of a brushed direct current electric motor from a plurality of ripple peaks of the motor's current.

**2. Description of Related Art**

Brushed direct current (DC) motors are commonly used in automotive power seat assemblies. For more complex applications, such as memory seats or anti-pinch functions, hall effect sensors are included with the motors to provide position feedback to an embedded electronic control unit (ECU). The ECU controls the movement and positioning of the seat assemblies based in part on the position feedback from the hall effect sensors.

However, adding hall effect sensors to the seat assemblies adds cost and complexity due to the hall effect sensors, extra wires connected between the hall effect sensors and the ECU, and additional digital channels on a controller in the ECU for processing the hall effect signals. Eliminating the hall effect sensors improves system level reliability as well as reducing overall cost of the seat assemblies. It is further desirable to eliminate the hall effect sensors so the extra wires and additional data channels on the controller are not required.

US 2020/0186062 A1 discloses a method for controlling a mechanically commutated direct current electric motor.

**SUMMARY OF THE INVENTION**

The invention provides a method for monitoring a motor within a seat assembly in an automotive vehicle comprising the features of claim 1.

The method comprises the steps of measuring raw current values drawn by the motor to reposition the seat assembly, temporally dividing the raw current values into sections based on size and variations in the raw current values, filtering the raw current values in each section to obtain filtered current values, determining a median value of the filtered current values for each section to obtain a plurality of sequential median values, determining a trend in the plurality of sequential median values, removing the trend from the plurality of sequential median values to obtain detrended values, determining a difference in magnitude between successive detrended values to obtain delta values, identifying a plurality of peaks in the delta values, determining which of the plurality of peaks has an amplitude greater than a threshold, wherein the peaks having an amplitude greater than the threshold correspond to detected local peaks within the filtered current values, and determining a rotational position or a speed based on the detected local peaks.

**BRIEF DESCRIPTION OF THE DRAWINGS**

Advantages of the present invention will be readily appreciated as the same becomes better understood by reference to the following detailed description when considered in connection with the accompanying drawings wherein:

Figure 1 is a perspective view of a seat assembly having a motor operatively coupled to gears, according to one embodiment of the present invention;

Figure 2 is a graphical representation of current drawn by the motor during movement of the seat assembly;

Figure 3 illustrates a system for determining motor position and speed, according to one embodiment of the present invention;

Figure 4 is a flow chart of the adaptive buffer algorithm of Figure 3;

Figure 5 is an exemplary surface plot for determining a delta current threshold, according to one embodiment of the present invention;

Figure 6 is a flow chart of the selective adaptive filter of Figure 3;

Figure 7 is a flow chart of a method of determining an integration factor, according to one embodiment of the present invention;

Figure 8 is a flow chart of another method of determining an integration factor, according to another embodiment of the present invention;

Figure 9 is an exemplary graph comparing a delta function with the change in current divided by the change in time (dC/dT);

Figures 10-13 illustrate how the magnitude of finite impulse response coefficients vary with changes to the integration factor;

Figure 14 is a diagrammatic representation of the adaptive median filter of Figure 3;

Figure 15 is a flow chart of the adaptive median filter of Figure 3;

Figure 16 is a graphical representation of the changes to the current waveform of Figure 2 as the current is processed according to one embodiment of the present invention;

Figure 17 is an enlarged graphical representation of a portion of the current waveform shown in Figure 16;

Figure 18 is an enlarged graphical representation of a portion of the current waveforms shown in Figure 16;

Figure 19 is diagrammatic representation of the de-sampling algorithm of Figure 3;

Figure 20 is an enlarged graphical representation of the waveform of Figure 18 after processing according to one embodiment of the present invention;

Figure 21 is a diagrammatic representation of the delta algorithm of Figure 3;

Figure 22 is a graphical representation of the waveform of Figure 16 after processing according to one embodiment of the present invention;

Figure 23 is a graphical representation of the waveform of Figure 22 after processing according to one embodiment of the present invention;

Figure 24 is an enlarged graphical representation of a portion of the waveform of Figure 23; and

Figure 25 is a graphical representation comparing the waveform of Figure 24 with corresponding hall effect pulses.

## DETAILED DESCRIPTION OF THE EMBODIMENTS

The present invention relates to systems and methods for detecting a rotational position and/or speed in the operation of seat assemblies 10 in automotive vehicles. Directional references employed or shown in the description, figures, or claims, such as top, bottom, upper, lower, upward, downward, lengthwise, widthwise, left, right, and the like, are relative terms employed for ease of description and are not intended to limit the scope of the invention in any respect. Referring to the Figures, like numerals indicate like or corresponding parts throughout the several views.

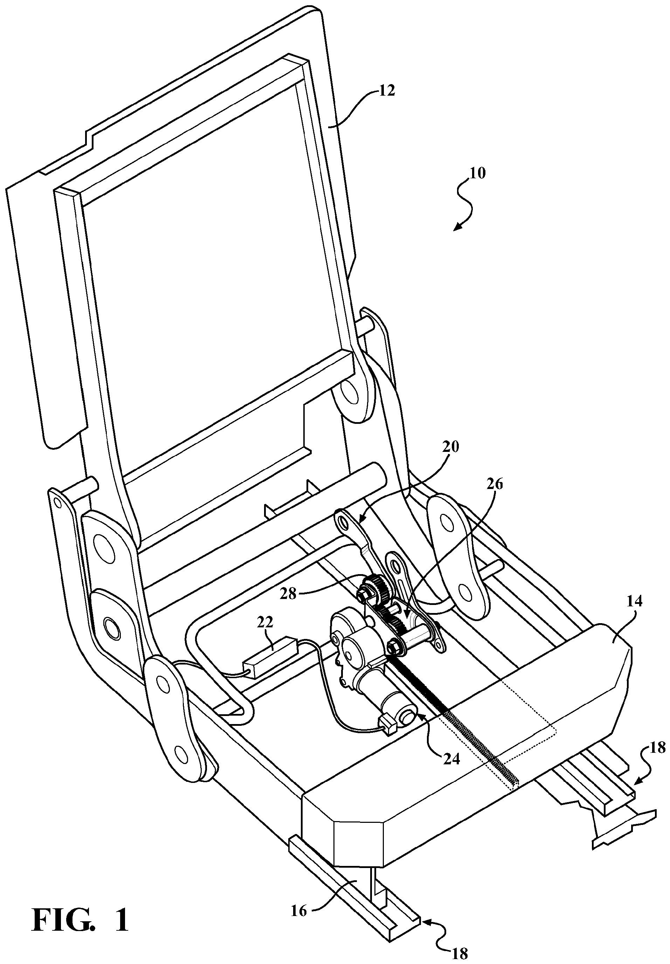

Figures 1-25 illustrate a system and method of controlling a seat assembly 10. As depicted in Figure 1, an exemplary seat assembly 10 includes a seat back 12, a seat cushion 14, a seat base 16, a pair of adjuster assemblies 18, and a linkage assembly 20. The seat back 12 is rotatably coupled to the seat cushion 14. The linkage assembly 20 pivotably couples the seat cushion 14 to the seat base 16. The seat base 16 is transposable fore and aft along the pair of adjuster assemblies 18.

The seat assembly 10 also includes an electronic control unit (ECU) 22, a motor 24 having a drive shaft 26 extending from the motor 24, and one or more gears 28 operatively coupled with the drive shaft 26. The ECU 22 controls the movement and positioning of the seat assembly 10 by controlling power to the motor 24 which drives the gears 28. The ECU 22 not only controls the movement and positioning of the seat assembly 10, but it also monitors these activities to ensure that they are working properly over time.

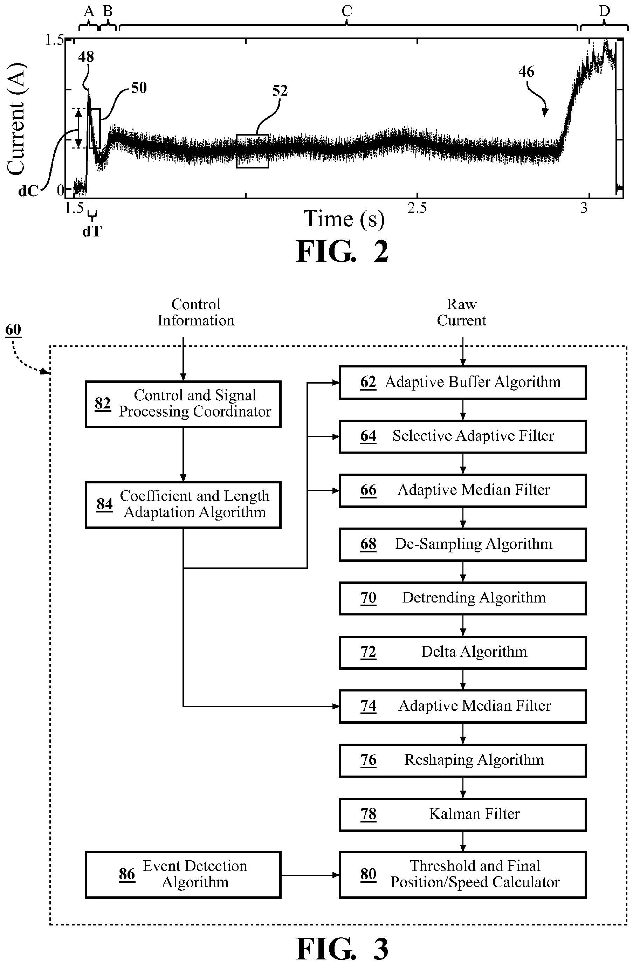

The ECU 22 is configured to monitor the current drawn by the motor 24 during operation, as reflected in an exemplary current waveform 46 shown in Figure 2. When the motor 24 initially receives power, the motor 24 begins to rotate the drive shaft 26 causing the one or more gears 28 to rotate. The current drawn by the motor 24 rapidly increases as the motor 24 initiates rotation of the drive shaft 26 and the one or more gears 28, as well as initiating movement of equipment tied to gears 28, as reflected in portion A of the current waveform 46 in Figure 2. After the gears 28 start moving, less power is needed to drive the gears 28. Therefore, the current will begin to decrease after it reaches a peak 48, as reflected in portion B of the current waveform 46. Portion C shows the current waveform 46 during steady state conditions. Portion D of Figure 2 shows the current waveform 46 when the gears 28 and/or the seat assembly 10 encounter an expected or unexpected impact or obstruction.

In the embodiment shown in Figure 1, the motor 24 is a bushed direct current (DC) motor 24, the internal components of which generate a ripple effect on the current drawn by the motor 24. However, the ripples in the raw current waveform 46 are mixed with electrical noise from the commutator, ADC noise, and transient conditions. The systems and methods described below separate the electrical noise and the transient conditions from the ripples in the raw current waveform 46 to isolate the current ripples, which can then be used to indicate the motor 24 rotation speed and/or position.

Figure 3 illustrates a system 60 for determining the position and/or speed of the motor 24 from the raw current waveform 46 drawn by the motor 24 according to one embodiment of the present invention. The system 60 includes an adaptive buffer algorithm 62, a selective adaptive filter 64, an adaptive median filter 66, a de-sampling algorithm 68, a detrending algorithm 70, a delta algorithm 72, a second adaptive median filter 74, a reshaping algorithm 76, a Kalman filter 78 and a threshold and final position/speed calculator 80. The system 60 also includes a control and signal processing coordinator 82, a coefficient and length adaptation algorithm 84, and an event detection algorithm 86. The system 60 initiates when the ECU 22 sends power to the motor 24 to move the seat assembly 10. The raw current waveform 46 drawn by the motor 24 is initially processed by the adaptive buffer algorithm 62.

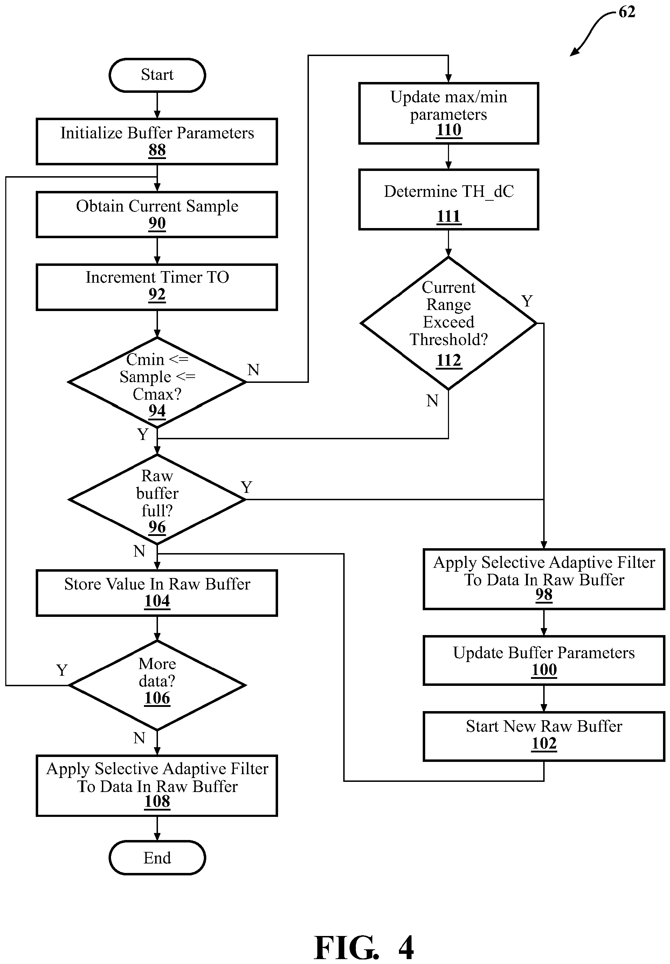

The adaptive buffer algorithm 62 places the current samples into raw current buffers for processing. The size of the raw current buffers differs depending on whether the current is in transient conditions or steady state. Referring to Figure 4, in the adaptive buffer algorithm 62, the ECU 22 begins by initializing the buffer parameters (step 88). The buffer parameters include a maximum buffer size Bmax, a timer T0, a minimum current stored in the buffer Cmin, the relative time at which the minimum current was recorded T1m, a maximum current stored in the buffer Cmax, and the relative time at which the maximum current was recorded T1M. An exemplary maximum buffer size Bmax is about 30-40 samples, but may be adjusted to reflect the motor 24 being evaluated. During initialization, the timer T0, the relative time at which the minimum current was recorded T1m, the relative time at which the maximum current was recorded T1M, the minimum current stored in the buffer Cmin, and the maximum current stored in the buffer Cmax are set to zero.

After initializing the buffer parameters (step 88), the ECU 22 obtains a sample of the current from the motor 24 (step 90) and increments the timer T0 (step 92). The timer T0 identifies the relative time at which each current value is read into the buffer. Alternatively, the ECU 22 may record the actual time that the current value is read into the buffer. The ECU 22 then determines whether the current value is between Cmin and Cmax (step 94). If the ECU 22 determines that the current value is between Cmin and Cmax, then the ECU 22 determines if the raw buffer is full (step 96) by determining whether T0 exceeds Bmax. If the raw buffer is full, then the ECU 22 applies the selective adaptive filter 64 to the data in the raw buffer (step 98). The ECU 22 then updates the buffer parameters (step 100) by resetting the timer T0, the minimum timer T1m and the maximum timer T1M to zero, and by setting the minimum current Cmin and the maximum current Cmax equal to the raw current value. The ECU 22 then starts a new raw buffer (step 102) and stores the raw current value into the raw buffer (step 104). The ECU 22 also performs step 104 if, at step 96, it determined that the raw buffer was not full. The ECU 22 then determines if there is still current running through the motor 24 (i.e., if the motor 24 is still running) (step 106). If the motor 24 is still running, then the ECU 22 returns to step 90 to obtain the next current value. Otherwise, the ECU 22 applies the selective adaptive filter 64 to the data remaining in the raw buffer (step 108).

At step 94, if the raw current value is less than the minimum current Cmin, then the minimum current Cmin is set equal to the raw current value and minimum timer T1m is set equal to the timer T0 (step 110). Also at step 94, if the raw current value is greater than the maximum current Cmax, then the maximum current Cmax is set equal to the raw current value and maximum timer T1M is set equal to the timer T0 (step 110). The ECU 22 then determines a current range threshold TH_dC (step 111) based on the difference in time (i.e., delta time dT) between the maximum current and the minimum current (i.e., T1m - T1m).

$$dT = T1M - T1m \qquad\qquad\qquad\qquad (\text{equation } 1)$$

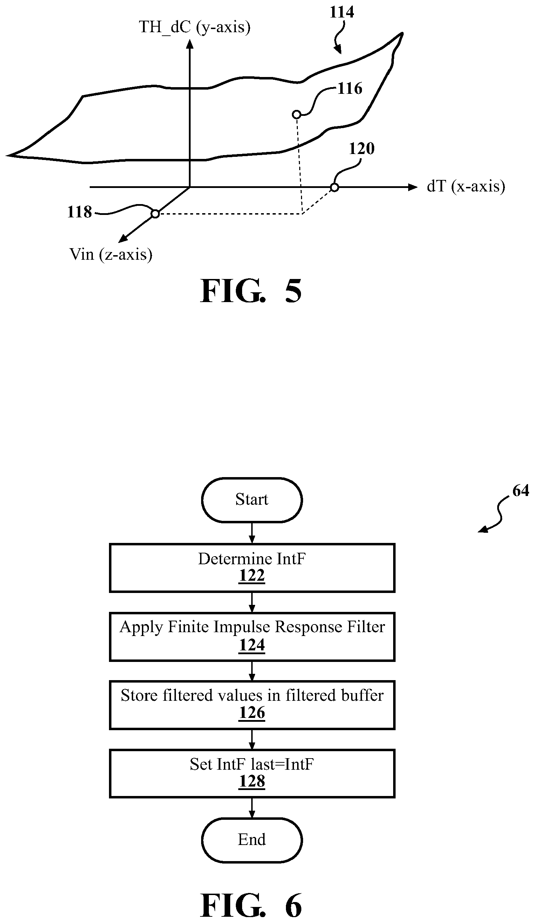

The current range threshold TH_dC may be determined based on the line voltage Vin received by the ECU 22 in addition to the difference in time dT. The line voltage Vin is the battery voltage and may vary in magnitude based on temperature, load on the battery, the amount of stored charge in the battery, the battery age, the battery state of health, and the like as non-limiting examples. The current range threshold TH_dC may be determined using a lookup table listing values of threshold TH_dC based on the line voltage Vin and delta time dT. Alternatively, the current range threshold TH_dC may be determined using a three-dimensional surface plot 114 as reflected in Figure 5 where the x-axis reflects delta time dT, the z-axis reflects the line voltage Vin, and the y-axis reflects the threshold TH_dC. As shown, the plot 114 may be used to determine the current range threshold TH_dC 116 based on the value of Vin 118 and the value of dT 120.

The ECU 22 then determines whether the current range (i.e., delta current dC) exceeds the current range threshold TH_dC (step 112). The current range dC is the difference between the maximum current Cmax and the minimum current Cmin (i.e., Cmax-Cmin).

$$dC = Cmax - Cmin \qquad\qquad (equation\ 2)$$

If the current range dC exceeds the current range threshold TH_dC, then the ECU 22 proceeds with step 98 to apply the selective adaptive filter 64 to the data in the raw buffer. If the current range dC does not exceed the threshold TH_dC, then the ECU 22 proceeds with step 96 to determine whether the raw buffer is full.

As discussed above, the ECU 22 applies the selective adaptive filter 64 to the data in the raw buffer if the current range dC exceeds a threshold TH_dC (step 112) or if the raw buffer is full (step 96). Thus, the ECU 22 uses the adaptive buffer algorithm 62 to temporally divide the raw current values into sections based on size and variations in the raw current values. The amount of data processed by the selective adaptive filter 64 is based in part on delta current over delta time dC/dT. For example, as reflected in Figure 2, buffer 50 has fewer raw current values than buffer 52 since buffer 50 occurs during transient conditions (portions A, B) and buffer 52 occurs during steady state conditions (portion C).

Referring to Figure 3, after running the adaptive buffer algorithm 62, the ECU 22 applies the selective adaptive filter 64 on the data stored in the raw buffers. The buffer parameters that are initialized at step 88 (Figure 4) include integration parameters that are processed by the selective adaptive filter 64. The integration parameters include the last integration factor IntF_last, a maximum integration factor IntF_max, a minimum integration factor IntF min, an incremental delta D_inc, a decremental delta D_dec, and a threshold TH_IF for the integration factor IntF. The last integration factor IntF_last is initially set to zero, while the remaining integration parameters are predefined parameters stored in memory. These remaining integration parameters may be determined based on experimentation during a design phase and optionally may be determined based on calibration of the seat assembly 10. Referring to Figure 6, in the selective adaptive filter 64, the ECU 22 begins by determining the integration factor IntF for the current raw buffer (step 122).

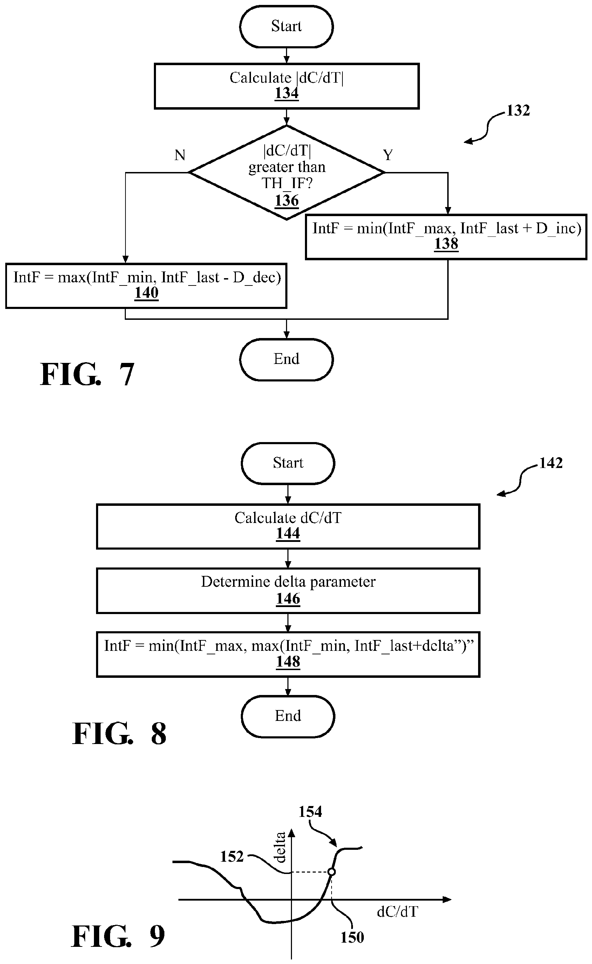

A first method 132 to determine the integration factor IntF (step 122) is shown in Figure 7. The ECU 22 initially calculates the absolute value of delta current dC divided by delta time dT |dC/dT| (step 134). Next, the ECU 22 determines if the absolute value of delta current dC divided by delta time dT |dC/dT| is greater than the threshold TH_IF (step 136). If the absolute value of delta current dC divided by delta time dT |dC/dT| is greater than threshold TH_IF, then the ECU 22 calculates a new integration factor IntF as the minimum value of the maximum integration factor IntF_max and the last integration factor IntF_last plus delta increment D_inc (step 138, equation 3).

$$IntF = min\ (IntF\_max,\ IntF\_last + D\_inc) \qquad (equation\ 3)$$

If at step 136 the absolute value of delta current dC divided by delta time dT |dC/dT| is not greater than the threshold TH_IF, then the ECU 22 calculates a new integration factor IntF as the maximum value of the minimum integration factor IntF_min and the last integration factor IntF_last minus the delta decrement D_dec (step 140, equation 4)

$$IntF = max\ (IntF\_min,\ IntF\_last - D\_dec) \qquad (equation\ 4)$$

A second method 142 to determine the integration factor IntF (step 122) is shown in Figure 8. The ECU 22 initially calculates the delta current dC divided by delta time dT dC/dT (step 144). The ECU 22 uses the delta current dC divided by delta time dT dC/dT to determine a delta parameter (step 146). Figure 9 shows an exemplary graph 154 illustrating the delta parameter 152 as a function of the delta current dC divided by delta time dT dC/dT 150. The delta parameter 152 may be determined from the graph 154. Alternatively, the ECU 22 may use a lookup table that lists values of the delta parameter 152 for various dC/dT ratios 150.

Returning to Figure 8, after the delta parameter 152 is determined (step 146), the ECU 22 calculates a new integration factor IntF by a) adding the last integration factor IntF_last and delta (IntF_last+delta), b) selecting the maximum value of the minimum integration factor IntF_min and IntF_last+delta, and c) selecting the minimum of IntF_max and max (IntF_min, IntF_last+delta) (step 148 and equation 5).

$$\text{IntF} = \min (\text{IntF\_max}, \max (\text{IntF\_min}, \text{IntF\_last} + \text{delta})) \quad (\text{equation } 5)$$

Returning to Figure 6, after determining the integration factor IntF at step 122, the ECU 22 applies a finite impulse response (FIR) filter to the data in the raw buffer (step 124) and stores the filtered data into a filtered buffer (step 126). Alternatively, the ECU 22 may apply a rolling average (RA) filter or an infinite impulse response (IIR) filter rather than the FIR filter without varying the scope of the present invention.

The FIR filter uses a number m of past raw current values to create a newly filtered signal using equation 6 shown below where $X(k)$ is the raw current value at time k and $Y(k)$ is the output of the FIR filter at time k. The number m of historical raw current values used to filter a specific raw current value may be a predetermined value stored in memory. Alternatively, the number m also may be determined or adjusted based on the integration factor IntF, the delta current dC, the delta time dT, and the like as non-limiting examples without varying the scope of the present invention. The relative weights of the FIR coefficients $w_0$... $w_m$ for the FIR filter are determined based on the integration factor IntF, and the sum of the FIR coefficients is equal to 1 (equation 7).

$$Y(k) = w_0 * X(k) + w_1 * X(k-1) + \ldots + w_m * X(k-m) \quad (\text{equation } 6)$$

$$w_0 + w_1 + \ldots + w_m = 1 \quad\quad\quad (\text{equation } 7)$$

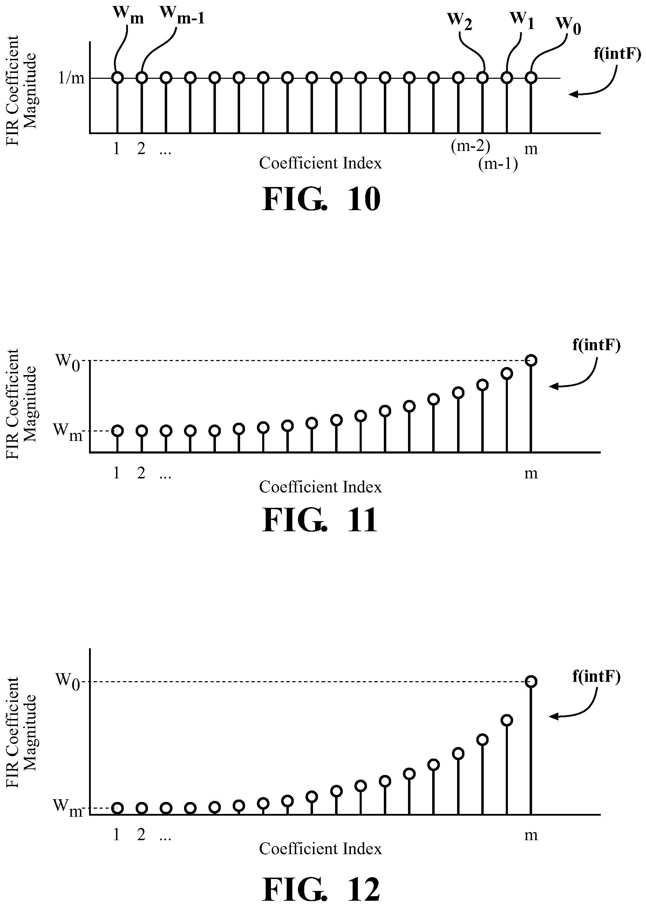

Figures 10-12 graphically illustrate how the FIR coefficients vary with changes to the integration factor IntF. Figure 10 illustrates the FIR coefficients when the integration factor IntF is equal to 0, Figure 11 shows the FIR coefficients when the integration factor IntF is larger than 0 but less than the maximum integration factor IntF_max, and Figure 12 shows the FIR coefficients when the integration factor IntF is equal to the maximum integration factor IntF_max.

Referring to Figure 10, when the integration factor IntF is equal to 0, all of the raw current samples are weighed equally, and the FIR coefficients have an equal magnitude of 1/m. Referring to Figure 11, as the integration factor IntF increases, the FIR coefficients for the newer raw current samples increase as the FIR coefficients for the older raw current samples decrease. Thus, as the integration factor IntF increases, the FIR filter places greater weight on coefficients for the newer raw current samples in comparison to the coefficients for older raw current samples. Referring to Figure 12, at the maximum integration factor IntF_max, the FIR coefficients for the oldest raw sample currents become negligible and, in some cases, may be 0, thereby reducing the number m of raw current values used to filter the raw current samples.

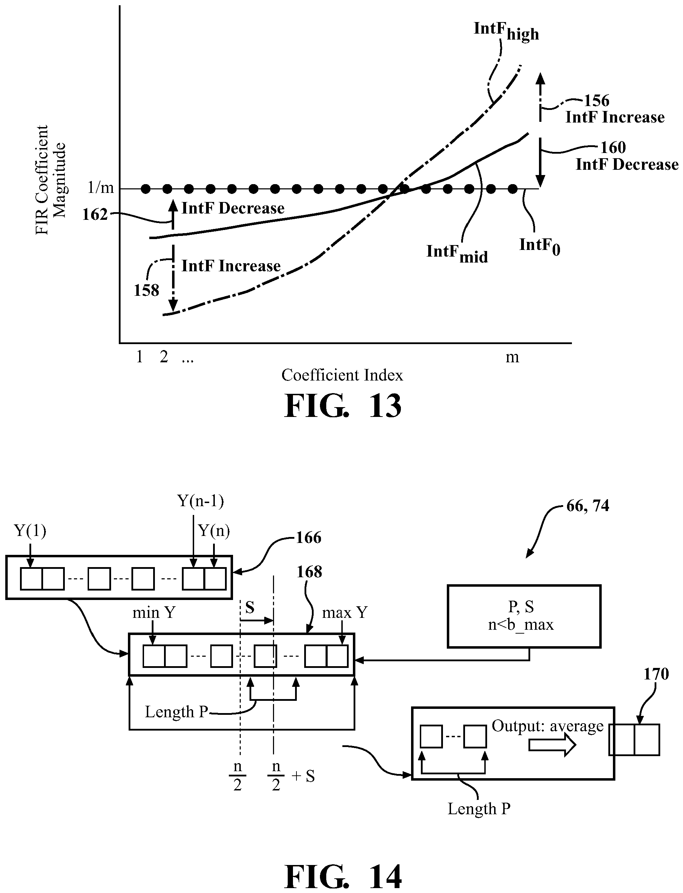

As reflected in Figure 13, the relationship between the coefficient magnitude and the coefficient indices varies as a function of the integration factor IntF. As the integration factor IntF increases from $\text{IntF}_{mid}$ to $\text{IntF}_{high}$, more weight is put on the new data entering the filter (arrow 156) and less weight is put on the older data (arrow 158) to shorten the response time. As the integration factor IntF decreases from $\text{IntF}_{mid}$ to $\text{IntF}_0$, less weight is put on the new data entering the filter (arrow 160) and more weight is put on the old data (arrow 162) until all data is treated equally when the integration factor IntF reaches zero $\text{IntF}_0$. The magnitude of the coefficients alternatively may be determined based on a lookup chart listing values for each coefficient for ranges of the integration factor IntF.

The selective adaptive filter 64 adjusts the weights wm of the filter coefficients and the number m of past raw current values used in the filter based on the amount of variation in the raw current values in the raw buffer. Adjusting the filter coefficients and the number of past raw current values improves the response time of the filter in comparison to using fixed filter coefficients and a fixed number of past values. The selective adaptive filter 64 shortens the response time of the filter when transient conditions are detected. In contrast, the selective adaptive filter 64 increases the response time of the filter during steady state conditions. Adjusting the filter response time relative to the amount of local variation in raw current values allows for noise to be filtered from the current waveform 46 while preserving the current ripples.

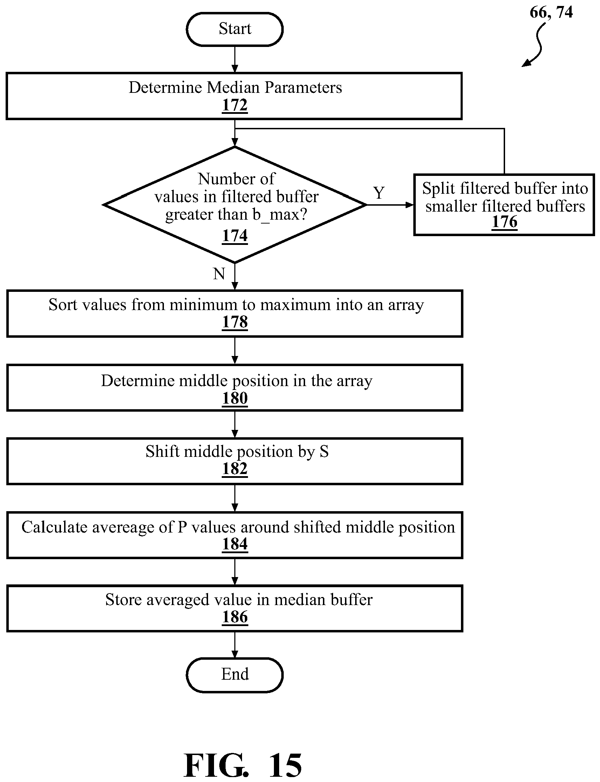

Returning to Figure 6, after storing the filtered data at step 126, the ECU 22 sets the last integration factor IntF_last to the current integration factor IntF (step 128) to process the next raw buffer. Referring to Figure 3, after applying the selective adaptive filter 64, the ECU 22 applies the Adaptive Median Filter 66 to the data in the filtered buffer. The adaptive median filter 66 is shown in more detail in Figures 14 and 15.

Referring to Figure 15, the ECU 22 initially determines the median parameters (step 172). The median parameters include the maximum buffer size b_max, the shift S in the median value and the number of filtered current values P that are used to calculate a mean value. The values for length P, shift S, and maximum buffer size b_max may be predetermined values stored in memory in the ECU 22. Those design parameter values are derived through optimization of the experimental data. The ECU 22 also may determine and/or adjust these values based on the amount of variation in the filtered buffer, the detected transient conditions, the delta current dC, the delta time dT, the integration factor IntF, and/or other conditions detected by the ECU 22.

Next, the ECU 22 determines if the size of the filtered buffer exceeds the maximum buffer size b_max (step 174). If the size of the filtered buffer exceeds the maximum buffer size, then the ECU 22 splits the filtered buffer into smaller filtered buffers (step 176) until the size of the filtered buffer is less than the maximum b_max. The ECU 22 then sorts the filtered current values from a minimum value to a maximum value (step 178). For example, as reflected in Figure 14, if the filtered buffer 166 includes n values, the ECU 22 sorts the values from min Y to max Y in array 168.

Next, the ECU 22 determines the middle position (the $\frac{n}{2}$ th value) in the array 168 (step 180) and shifts the middle position by shift S to obtain a shifted middle position (the $\frac{n}{2}+S$ th value) (step 182). If n is an odd number, the ECU 22 rounds $\frac{n}{2}$ up to the next integer. The middle position is shifted to a shifted middle position to reduce the effect of transient conditions.

The ECU 22 then determines the average of P filtered current values centered around the shifted middle position (step 184) and stores this "modified median value" in a median buffer 170 (step 186). The ECU 22 may adjust the value of P to ensure that the median is calculated properly (e.g., if n is even, the ECU 22 adjusts P to be even). In some instances, the ECU 22 may apply a standard median filter to the data in the filtered buffer. A standard median filter is obtained by setting the length P equal to 1 and setting shift S equal to 0.

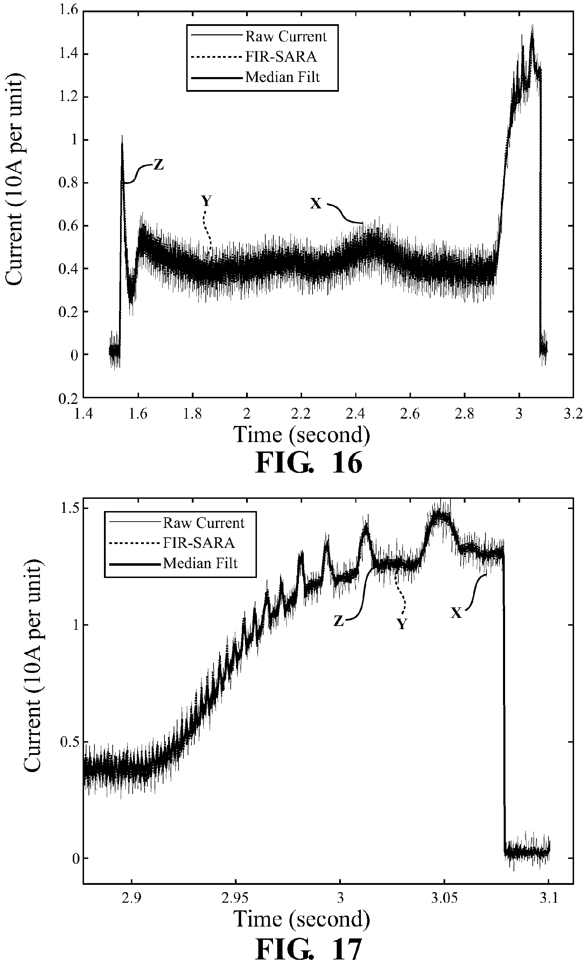

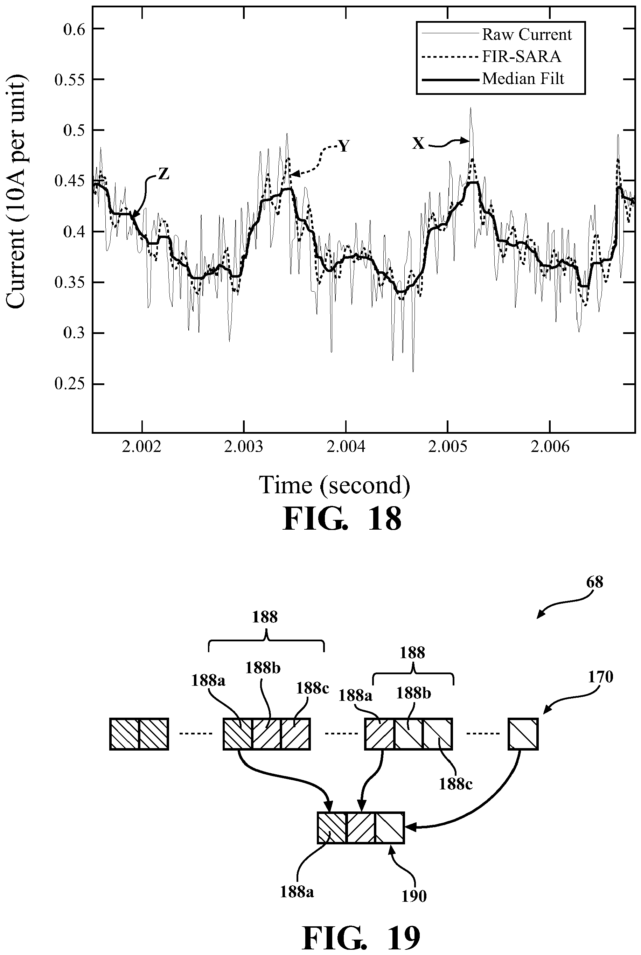

Figures 16-18 illustrate the effect of applying the selective adaptive filter 64 and the adaptive median filter 66 to the raw current waveform 46 (X). Figure 16 shows the effect on the entire current waveform 46 from Figure 2, while Figure 17 shows an enlarged view of the effect when the seat assembly 10 encounters an expected or unexpected impact or obstruction (portion D of Figure 2) and Figure 18 shows an enlarged view of the effect during steady state conditions (portion C of Figure 2).

As reflected in Figures 16-18, the raw current waveform 46 (X) has greater fluctuations than the filtered current Y because the selective adaptive filter 64 filters a portion of the noise out of the raw current waveform 46 (X) while minimizing distortions in the filtered current waveform Y caused by the filtering process. Similarly, the filtered current Y has greater fluctuations than the modified median filtered data Z because the adaptive median filter 66 removes localized spikes in the filtered current Y while maintaining shifts in the filtered raw current values Y(k) that are indicative of jumps in amplitude related to movement of the seat assembly 10. The adaptive median filter 66 is configurable to emphasize edged effects in the filtered buffers and to provide a balance between smoothness and abrupt transitions in the filtered current values Y(k). The median current waveform Z tracks closely to the general shape of the raw current waveform 46 (X) and the filtered current waveform Y with a reduction of the fluctuations caused by noise.

The selective adaptive filter 64 requires a high resolution signal to process the data. Thus, the raw current values are logged at a high speed at about 1 sample per millisecond when they are processed through the adaptive buffer algorithm 62, the selective adaptive filter 64 and the adaptive median filter 66. A slower sample rate of about 1 sample per 5 milliseconds is sufficient for remainder of the system 60. Accordingly, referring to Figure 3, the ECU 22 applies a de-sampling algorithm 68 to the median filtered values to reduce the sample rate, which also reduces the amount of processing required by the ECU 22. The de-sampling algorithm 68 is further illustrated in Figure 19.

Referring to Figure 19, the ECU 22 de-samples the data in the median buffer 170 by a predetermined amount. For example, when the ECU 22 de-samples by a factor of three, the ECU 22 partitions the data stored in the median buffer 170 into groups 188 of three consecutive median values 188a, 188b, 188c. Next, the ECU 22 stores the first value 188a in each group 188 into a de-sampled buffer 190 and discards the next two values 188b, 188c. The ECU 22 repeats the de-sampling process for each group 188 of three values 188a, 188b, 188c stored in the median buffer 170.

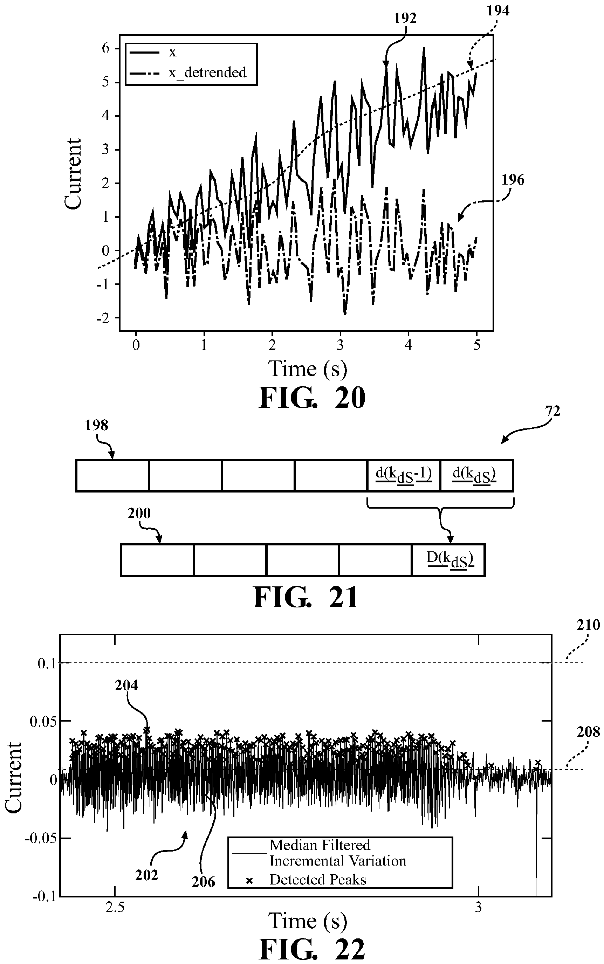

Referring to Figure 3, after the ECU 22 applies the de-sampling algorithm 68, the ECU 22 applies a detrending algorithm 70 to the de-sampled values. Referring to Figure 20, the ECU 22 determines a trend 194 in the de-sampled waveform 192 and subtracts the trend 194 from the de-sampled waveform 192 to produce a detrended waveform 196.

Next, referring to Figure 3, the ECU 22 applies a delta algorithm 72 to the detrended values. The delta algorithm 72 further reduces any interference from trends within the current waveform 46. Referring to Figure 21, in the delta algorithm 72, the ECU 22 obtains successive detrended values from the detrended buffer 198, calculates a delta value as the difference between these successive detrended values, and stores the delta values in a delta buffer 200. For example, if D(kas) is the delta value at de-sampled time $k_{dS}$, $d(k_{dS})$ is the detrended value at de-sampled time $k_{dS}$, and $d(k_{dS}-1)$ is the detrended value at de-sampled time $k_{dS}-1$, the ECU 22 calculates the delta value $D(k_{dS})$ using equation 8 shown below:

$$D(k_{dS}) = d(k_{dS}) - d(k_{dS}-1) \qquad\qquad \text{(equation 8)}$$

Referring to Figure 3, after applying the delta algorithm 72, the ECU 22 applies a second adaptive median filter 74 to the delta values D. In some embodiments, the ECU 22 may omit the second adaptive median filter 74 without varying the scope of the present invention. The second adaptive median filter 74 uses the same process shown in Figure 15 for the adaptive median filter 66. The ECU 22 may select values for length P, shift S, and maximum buffer size b_max for the second adaptive median filter 74 based on predetermined values and/or based on the amount of variation detected in the delta values D in the delta buffer 200.

Referring to Figure 3, the ECU 22 next applies a reshaping algorithm 76 to the median delta waveform. Figure 22 illustrates an exemplary median delta waveform 202 for the median delta values D. The delta waveform 202 includes local peaks 204 as well as non-peak values 206. The local peaks 204 generally correspond to the current ripples in the raw current waveform 46 with the non-peak values 206 generally corresponding to noise in the current waveform 46.

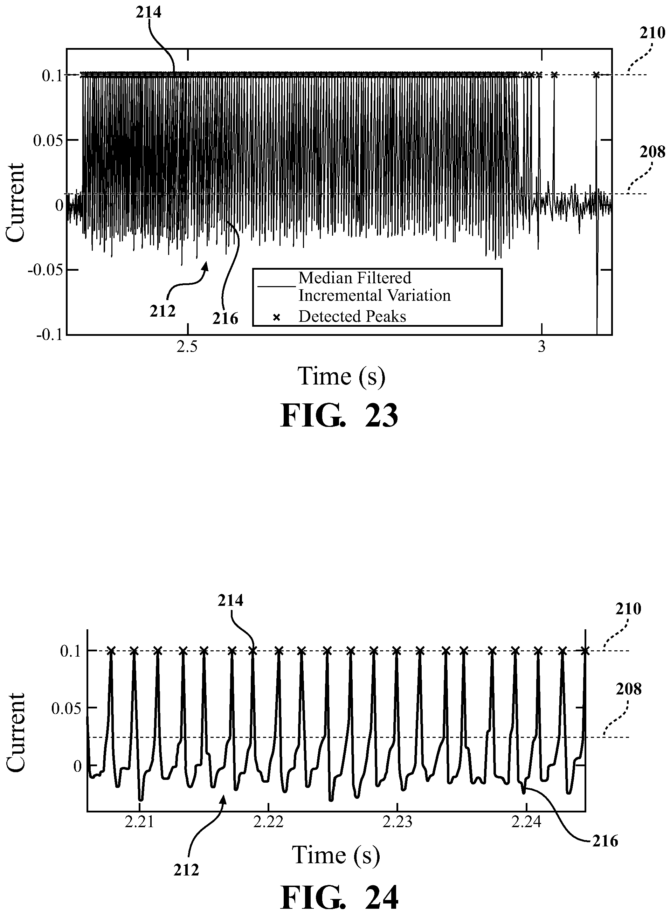

The reshaping algorithm 76 reshapes the delta waveform 202 to enhance the separation between the local peaks 204 and the non-peak values 206. To reshape the delta waveform 202, the ECU 22 selects the local peaks 204 having a magnitude greater than a predetermined threshold 208 and shifts these local peaks 204 to have a magnitude corresponding to a predetermined raised level 210. As shown in Figures 22 and 23, the shifted local peaks 214 have a magnitude of the raised level 210 while the remaining portion of the delta waveform 216 (i.e., the noise values) has the same magnitude in both the reshaped delta waveform 212 and the original delta waveform 202. Figure 24 shows an enlarged view of a portion of the reshaped delta waveform 212 of Figure 23.

Referring to Figure 3, the reshaped delta waveform 212 is filtered using a Kalman filter 78 to further separate the shifted local peaks 214 from the noise values 216. It will be appreciated that the Kalman filter 78 may be omitted without altering the scope of the present invention. After the ECU 22 processes the reshaped delta waveform 212 through the optional Kalman filter 78, the ECU 22 applies a threshold and final position/speed calculator 80 to determine the speed and/or position of the motor 24.

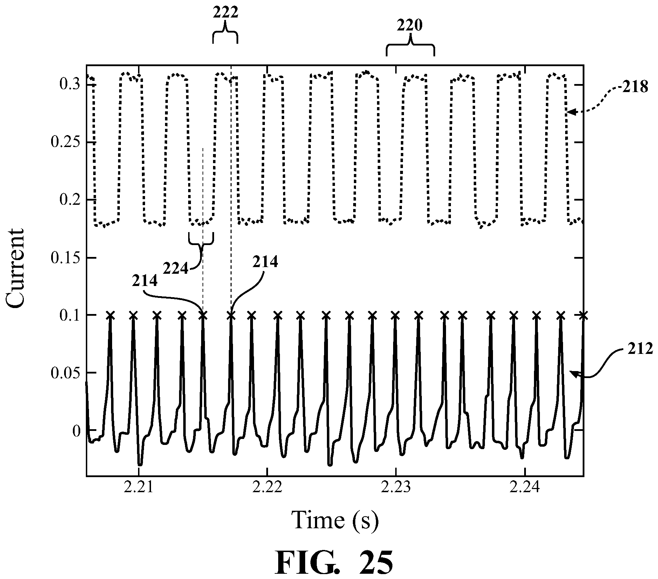

Figure 25 shows a comparison of the reshaped delta waveform 212 and the corresponding hall effect waveform 218 produced by a hall effect sensor when it is operatively coupled to the drive shaft 26 of the DC motor 24. In Figure 25, the hall effect waveform 218 is shifted in amplitude to improve clarity. The hall effect waveform 218 includes a plurality of spaced apart hall effect pulses 220 having a high portion 222 and a low portion 224. Comparing the hall effect waveform 218 with the reshaped delta waveform 212, the reshaped delta waveform 212 includes a shifted local peak 214 for each of the high and low portions 222, 224 of the hall effect waveform 218. As reflected in Figure 25, the shifted local peaks 214 occur during the respective high and low portions 222, 224 of the hall effect pulses 220. However, the shifted local peaks 214 may drift within the respective high and low portions 222, 224 of the hall effect pulses 220 over time.

Each local peak 214 in the reshaped delta waveform 212 generally corresponds to a current ripple in the current waveform 46. Thus, the ECU 22 uses the shifted local peaks 214 in the reshaped delta waveform 212 to determine the ripple counts. The ECU 22 then determines the rotational position and speed of the motor drive shaft 26 based on the ripple counts. The method to determine the rotational position and speed from the ripple counts is similar to methods used to determine the rotational position and speed based on the hall effect waveform with modifications to account for having ripple counts in place of the hall effect pulses 220.

Referring to Figure 3, the ECU 22 also obtains control information relating to the position of the seat assembly 10, requests received to reposition the seat assembly 10, and/or the power provided to the motor 24. The ECU 22 uses the control information and the control and signal processing coordinator 82 to coordinate processing of the raw current values through the components of the system 60, including whether to process the data through the second adaptive median filter 74 and the Kalman filter 78.

The ECU 22 uses the coefficient and length adaption algorithm 84 to adjust one or more parameters of the adaptive buffer algorithm 62, the selective adaptive filter 64 and the adaptive median filters 66, 74. The parameters include one or more of variation parameters, integration parameters, adaptive median filter parameters and the like as non-limiting examples.

Referring to Figure 3, the system 60 also includes an event detection algorithm 86. The ECU 22 uses the event detection algorithm 86 to detect impacts related to movement of the seat assembly 10 such as the seat assembly 10 reaching an end of travel, impacting an obstruction, and the like as non-limiting examples. The ECU 22 may modify the determined rotational position and speed based on any event that it detects to avoid over- or undercounting of the current ripples.

As discussed above, the system 60 of the present invention provides motor speed and position feedback based on current ripples in the current waveform 46 drawn by the motor 24 without relying on a hall effect sensor. The elimination of the hall effect sensor improves system level reliability as well as reduces overall cost of the seat assembly 10.

The invention has been described in an illustrative manner, and it is to be understood that the terminology, which has been used, is intended to be in the nature of words of description rather than of limitation. Many modifications and variations of the present invention are possible in light of the above teachings. It is, therefore, to be understood that within the scope of the appended claims, the invention may be practiced other than as specifically described.

**Claims**

1. A method for monitoring a motor (24) within a seat assembly (10) in an automotive vehicle, the method comprising the steps of:

    measuring raw current values drawn by the motor (24) to reposition the seat assembly (10);
    temporally dividing the raw current values into sections based on size and variations in the raw current values;
    filtering the raw current values in each section to obtain filtered current values; **characterised by**
    determining a median value of the filtered current values for each section to obtain a plurality of sequential median values;
    determining a trend in the plurality of sequential median values;
    removing the trend from the plurality of sequential median values to obtain detrended values;
    determining a difference in magnitude between successive detrended values to obtain delta values (D);
    identifying a plurality of peaks in the delta values (D);
    determining which of the plurality of peaks has an amplitude greater than a threshold (208), wherein the peaks having an amplitude greater than the threshold (208) correspond to detected local peaks (204) within the filtered current values; and
    determining a rotational position or a speed based on the detected local peaks (204).

2. The method as set forth in claim 1, wherein the step of filtering the raw current values comprises the steps of:

    applying an adaptive filter (64) to the raw current values to obtain the filtered current values, wherein the adaptive filter (64) includes a plurality of filter coefficients; and
    adjusting the plurality of filter coefficients based on the variations in the raw current values.

3. The method as set forth in claim 2, wherein the adaptive filter (64) comprises a finite impulse response filter, a rolling average filter, or an infinite impulse response filter.

4. The method as set forth in claim 1, further comprising the step of:
    filtering the delta values (D) using a Kalman filter prior to identifying the plurality of peaks in the delta values (D).

**Patentansprüche**

1. Verfahren zur Überwachung eines Motors (24) innerhalb einer Sitzanordnung (10) in einem Kraftfahrzeug, wobei das Verfahren die folgenden Schritte umfasst:

    Messung der vom Motor (24) aufgenommenen Rohstromwerte, um die Sitzanordnung (10) neu zu positionieren,
    zeitliche Unterteilung der Rohstromwerte in Abschnitte, die auf der Größe und den Schwankungen der Rohstromwerte basieren,
    Filterung der Rohstromwerte in jedem Abschnitt, um gefilterte Stromwerte zu erhalten, **gekennzeichnet durch**
    Bestimmen eines Medianwerts der gefilterten Stromwerte für jeden Abschnitt, um eine Anzahl von aufeinanderfolgenden Medianwerten zu erhalten,
    Bestimmung eines Trends in der Anzahl der aufeinanderfolgenden Medianwerte,
    Entfernen des Trends aus der Anzahl der aufeinanderfolgenden Medianwerte, um abweichende Werte zu erhalten,
    Bestimmung des Größenunterschieds zwischen aufeinanderfolgenden detrendierten Werten, um Delta-Werte (D) zu erhalten,
    Identifizierung einer Anzahl von Spitzen in den Delta-Werten (D), Bestimmen, welche der Anzahl von Spitzen eine Amplitude größer als ein Schwellenwert (208) hat, wobei die Spitzen mit einer Amplitude größer als der Schwellenwert (208) den erfassten lokalen Spitzen (204) innerhalb der gefilterten Stromwerte entsprechen, und
    Bestimmung einer Drehposition oder einer Geschwindigkeit auf der Grundlage der erfassten lokalen Spitzen (204).

2. Verfahren nach Anspruch 1, wobei der Schritt des Filterns der Rohstromwerte die folgenden Schritte umfasst:

    Anwenden eines adaptiven Filters (64) auf die rohen Stromwerte, um die gefilterten Stromwerte zu erhalten, wobei das adaptive Filter (64) eine Anzahl von Filterkoeffizienten enthält, und

Anpassen der mehreren Filterkoeffizienten auf der Grundlage der Veränderungen der Rohstromwerte.

**3.** Verfahren nach Anspruch 2, wobei das adaptive Filter (64) ein Filter mit endlicher Impulsantwort, ein Filter mit gleitendem Durchschnitt oder ein Filter mit unendlicher Impulsantwort umfasst.

**4.** Verfahren nach Anspruch 1, das ferner den folgenden Schritt umfasst:
Filtern der Delta-Werte (D) unter Verwendung eines Kalman-Filters vor der Identifizierung der Anzahl von Spitzen in den Delta-Werten (D).

**Revendications**

**1.** Procédé de surveillance d'un moteur (24) à l'intérieur d'un assemblage de siège (10) dans un véhicule automobile, le procédé comprenant les étapes consistant à :

mesurer des valeurs de courant brutes soutirées par le moteur (24) pour repositionner l'assemblage de siège (10) ;
diviser temporairement les valeurs de courant brutes en sections sur la base d'une taille et de variations dans les valeurs de courant brutes ;
filtrer les valeurs de courant brutes dans chaque section pour obtenir des valeurs de courant filtrées ;
**caractérisé par** les étapes consistant à
déterminer une valeur médiane des valeurs de courant filtrées pour chaque section afin d'obtenir une pluralité de valeurs médianes séquentielles ;
déterminer une tendance dans la pluralité de valeurs médianes séquentielles ;
éliminer la tendance de la pluralité de valeurs médianes séquentielles pour obtenir des valeurs à tendance éliminée ;
déterminer une différence de grandeur entre des valeurs à tendance éliminée successives pour obtenir des valeurs delta (D) ;
identifier une pluralité de crêtes dans les valeurs delta (D) ;
déterminer laquelle de la pluralité de crêtes a une amplitude supérieure à un seuil (208), dans lequel les crêtes ayant une amplitude supérieure au seuil (208) correspondent à des crêtes locales détectées (204) à l'intérieur des valeurs de courant filtrées ; et
déterminer une position de rotation ou une vitesse sur la base des crêtes locales détectées (204).

**2.** Procédé selon la revendication 1, dans lequel l'étape consistant à filtrer les données de courant brutes comprend les opérations consistant à :

appliquer un filtre adaptatif (64) aux valeurs de courant brutes pour obtenir les valeurs de courant filtrées, dans lequel le filtre adaptatif (64) inclut une pluralité de coefficients de filtre ; et
ajuster la pluralité de coefficients de filtre sur la base des variations dans les valeurs de courant brutes.

**3.** Procédé selon la revendication 2, dans lequel le filtre adaptatif (64) comprend un filtre à réponse impulsionnelle finie, un filtre à moyenne mobile ou un filtre à réponse impulsionnelle infinie.

**4.** Procédé selon la revendication 1, comprenant en outre l'étape consistant à :
filtrer les valeurs delta (D) en utilisant un filtre de Kalman avant d'identifier la pluralité de crêtes dans les valeurs delta (D).

**FIG. 1**

**FIG. 2**

**FIG. 3**

62

```
                                    ┌─────────────────────┐
                                    │  Update max/min     │
                                    │  parameters         │
                                    │       110           │
                                    └─────────┬───────────┘
┌─────────────┐                               │
│    Start    │                               ▼
└──────┬──────┘                     ┌─────────────────────┐
       │                            │  Determine TH_dC    │
       ▼                            │       111           │
┌──────────────────────┐           └─────────┬───────────┘
│ Initialize Buffer    │                      │
│ Parameters           │                      ▼
│        88            │                  ◇ Current
└──────┬───────────────┘                    Range
       │                                    Exceed        Y
       ▼                                    Threshold?  ──────┐
┌──────────────────────┐                       112           │
│ Obtain Current Sample│                      N              │
│        90            │                      │              │
└──────┬───────────────┘                      │              │
       │                                      │              │
       ▼                                      │              │
┌──────────────────────┐                      │              │
│ Increment Timer TO   │                      │              │
│        92            │                      │              │
└──────┬───────────────┘                      │              │
       │                                      │              │
       ▼                                      │              │
    ◇ Cmin <=        N                        │              │
      Sample <=  ────────────────────────────┘              │
      Cmax?                                                  │
      94                                                     │
       │ Y                                                   │
       ▼                                                     │
    ◇ Raw                                                    │
      buffer       Y                                         │
      full?   ──────────────────────────────────────────────┤
      96                                                     │
       │ N                                                   │
       ▼                                                     ▼
┌──────────────────────┐              ┌──────────────────────────────┐
│ Store Value In Raw   │              │ Apply Selective Adaptive     │
│ Buffer               │              │ Filter To Data In Raw Buffer │
│        104           │              │           98                 │
└──────┬───────────────┘              └─────────┬────────────────────┘
       │                                        │
       ▼                                        ▼
    ◇ More          Y                 ┌──────────────────────────────┐
      data?    ──────┐                │ Update Buffer Parameters     │
      106            │                │           100                │
       │ N           │                └─────────┬────────────────────┘
       ▼             │                          │
┌──────────────────────┐                        ▼
│ Apply Selective      │              ┌──────────────────────────────┐
│ Adaptive Filter To   │              │ Start New Raw Buffer         │
│ Data In Raw Buffer   │              │           102                │
│        108           │              └──────────────────────────────┘
└──────┬───────────────┘
       │
       ▼
┌─────────────┐
│     End     │
└─────────────┘
```

**FIG. 4**

TH_dC (y-axis)

114

116

120

dT (x-axis)

118

Vin (z-axis)

**FIG. 5**

Start

64

Determine IntF
**122**

Apply Finite Impulse Response Filter
**124**

Store filtered values in filtered buffer
**126**

Set IntF last=IntF
**128**

End

**FIG. 6**

Start

Calculate |dC/dT|
**134**

|dC/dT|
greater than
TH_IF?
**136**

N

Y

IntF = min(IntF_max, IntF_last + D_inc)
**138**

IntF = max(IntF_min, IntF_last - D_dec)
**140**

End

**FIG. 7**

Start

132

Calculate dC/dT
**144**

Determine delta parameter
**146**

IntF = min(IntF_max, max(IntF_min, IntF_last+delta")")"
**148**

End

**FIG. 8**

142

154

152

150

delta

dC/dT

**FIG. 9**

FIG. 10

FIG. 11

FIG. 12

**FIG. 13**

**FIG. 14**

```
                    ┌─────────┐
                    │  Start  │                              66, 74
                    └────┬────┘
                         │
        ┌────────────────▼─────────────────┐
        │   Determine Median Parameters    │
        │              172                 │
        └────────────────┬─────────────────┘
                         │
                    ╱────▼─────╲
                   ╱ Number of   ╲
                  ╱ values in      ╲        Y    ┌──────────────────────┐
                 ◄ filtered buffer   ►─────────► │ Split filtered buffer│
                  ╲ greater than    ╱            │ into smaller filtered│
                   ╲  b_max?  174  ╱             │ buffers     176      │
                    ╲────┬─────╱                 └──────────────────────┘
                       N │
        ┌────────────────▼─────────────────────────┐
        │ Sort values from minimum to maximum       │
        │ into an array          178                │
        └────────────────┬──────────────────────────┘
                         │
        ┌────────────────▼─────────────────┐
        │ Determine middle position in the  │
        │ array               180           │
        └────────────────┬─────────────────┘
                         │
        ┌────────────────▼─────────────────┐
        │    Shift middle position by S     │
        │              182                  │
        └────────────────┬─────────────────┘
                         │
        ┌────────────────▼─────────────────────────┐
        │ Calculate avereage of P values around     │
        │ shifted middle position      184          │
        └────────────────┬──────────────────────────┘
                         │
        ┌────────────────▼─────────────────┐
        │  Store averaged value in median   │
        │  buffer             186           │
        └────────────────┬─────────────────┘
                         │
                    ┌────▼────┐
                    │   End   │
                    └─────────┘
```

# FIG. 15

**FIG. 16**

**FIG. 17**

FIG. 18

FIG. 19

**FIG. 20**

**FIG. 21**

**FIG. 22**

FIG. 23

FIG. 24

FIG. 25

**REFERENCES CITED IN THE DESCRIPTION**

**Patent documents cited in the description**

•  US 20200186062 A1